## Europäisches Patentamt
## European Patent Office
## Office européen des brevets

(19)

(11) Veröffentlichungsnummer: **0 013 033**
**A1**

(12)

# EUROPÄISCHE PATENTANMELDUNG

(21) Anmeldenummer: **79105403.4**

(51) Int. Cl.³: **B 65 G 1/04**

(22) Anmeldetag: **29.12.79**

(30) Priorität: **29.12.78 DE 2856808**

(43) Veröffentlichungstag der Anmeldung:
**09.07.80 Patentblatt 80/14**

(84) Benannte Vertragsstaaten:
**AT BE CH FR GB IT LU NL SE**

(71) Anmelder: **Theobald, Adolf**
**Merschstrasse 5**
**D-5758 Fröndenberg-Warmen(DE)**

(72) Erfinder: **Theobald, Adolf**
**Merschstrasse 5**
**D-5758 Fröndenberg-Warmen(DE)**

(74) Vertreter: **Niemeyer, Hans, Dipl.-Ing.**
**Schwalbenstrasse 11**
**D-7024 Filderstadt 4(DE)**

(54) **Austragvorrichtung, insbesondere für das Austragen von Stabmaterial und dergleichen aus den Kassetten einer Regalanlage.**

(57) Die Erfindung befaßt sich mit einer Austragvorrichtung für in einem nach oben offenen Behälten (8a,8b) befindliches Material und besteht darin, daß das Material mittels einer Hubstempelanordnung 14 durch Bodenöffnungen des Behälters nach oben gedrückt wird, wobei insbesondere an den Einsatz in Regalanlagen gedacht ist, in denen Behälter aus einer Kassette und einem Laufwagen 6a,6b bestehen und die spezielle Ausschleusstationen für einen schnellen Kassettenwechsel aufweisen.

EP 0 013 033 A1

./...

Fig. 1

0013033

A 1983
27. Dezember 1978

Anmelder: Adolf Theobald
Merschstraße 5
5758 Fröndenberg-Warmen

B e s c h r e i b u n g

Austragvorrichtung, insbesondere für das
Austragen von Stabmaterial und dergleichen
aus den Kassetten einer Regalanlage

Die Erfindung betrifft eine Austragvorrichtung für in einem
nach oben offenen Behälter befindliches Material, insbesondere
Stabmaterial und dergleichen. Speziell befaßt sich die Erfindung mit dem Austragen bzw. Ausschleusen von Stabmaterial und
dergleichen aus nach oben offenen Kassetten, die der Materiallagerung in Regalanlagen dienen.

Es ist bekannt, Stab- bzw. Langmaterial, wie Stangen, Rohre,
Winkelprofile und dergleichen, auf Paletten bzw. in Kassetten
in umfangreichen Regalanlagen einzulagern, welche eine übersichtliche und raumsparende Lagerhaltung ermöglichen. Derartige Regalanlagen sind mit Fördereinrichtungen bzw. Beschickungs-
und Entnahmeeinrichtungen ausgerüstet, mit deren Hilfe die
mit dem zu lagernden Material gefüllten Kassetten in die einzelnen Fächer der Regalanlage hinein und aus diesen heraus bewegt werden können. Eine besonders fortschrittliche Regalanlage dieser Art ist in einer früheren Anmeldung des Anmelders
beschrieben, die sich mit einer Einrichtung zur Speicherung
von für die Vorratshaltung dienenden Paletten befaßt, bei der
eine die bodenfrei aufgeständerten Regale unterfahrende,
zwangsgeführte Beschickungs- und Entnahmevorrichtung vorgesehen ist (P 27 25 789.2).

Bei der Lagerung von größeren Materialmengen in Kassetten
oder auf Paletten bzw. ganz allgemein in nach oben offenen
Behältern ist es bisher problematisch, das Material aus den
Behältern auszutragen bzw. zu vereinzeln, da im allgemeinen
nur eine einzige Fördervorrichtung vorhanden ist, mit deren
Hilfe der jeweilige Behälter zunächst in eine Arbeitsposition
transportiert werden muß, wo dann die benötigten Teile einer
bestimmten Materialart im allgemeinen von Hand entnommen werden müssen, woraufhin der Behälter mit dem restlichen Material
von der Fördereinrichtung zunächst wieder in sein Regalfach
zurücktransportiert werden muß. Erst dann ist es möglich, den
nächsten Behälter mit Hilfe der Fördervorrichtung zu der Arbeitsstation zu transportieren, wo in der Zwischenzeit nicht
weiter gearbeitet werden kann. Diese Schwierigkeiten werden
besonders deutlich, wenn für einen Auftrag eine Vielzahl von
verschiedenen Materialteilen benötigt wird, insbesondere wenn
die einzelnen Materialteile, ausgehend von Langmaterial in den
Behältern mit einer bestimmten Länge zugeschnitten werden müssen. So ist beispielsweise bei der Zusammenstellung des Materials für den Aufbau eines Regals eine Vielzahl von Profilen
unterschiedlicher Form und Stärke erforderlich, so daß nacheinander eine ganze Reihe von Kassetten oder dergleichen an
eine Bearbeitungsstation transportiert werden muß, wo dann
aus dem gelagerten Langmaterial Bauteile vorgegebener Länge
zugeschnitten werden, wobei der Arbeitsablauf bei jedem Materialwechsel zwangsläufig unterbrochen werden muß, bis die zuletzt benötigte Kassette zurücktransportiert und die neue Kassette herangeschafft ist. Zusätzliche Schwierigkeiten ergeben
sich darüber hinaus an der Arbeitsstation selbst aufgrund der
Tatsache, daß man an die teilweise recht schweren Träger und
dergleichen nur schlecht herankommt, insbesondere wenn sich
nur noch einige wenige Stangen, Stäbe, Träger oder dergleichen am Boden eines Behälters befinden, wo das Langmaterial auch mittels mechanischer Greifeinrichtungen und dergleichen nur schwer zu erfassen ist.

Ausgehend vom Stande der Technik und der vorstehend erläuterten Problematik liegt der Erfindung die Aufgabe zugrunde, eine verbesserte Austragvorrichtung für in einem nach oben offenen Behälter befindliches Material anzugeben, welche eine schnelle und bequeme Handhabung der einzelnen Materialteile an einer Arbeitsstation ermöglicht und welche in Ausgestaltung der Erfindung die an der Arbeitsstation entstehenden Wartezeiten für den Materialtransport bei vergleichsweise geringem Aufwand auf ein Minimum reduziert.

Diese Aufgabe wird bei einer Austragvorrichtung der eingangs beschriebenen Art gemäß der Erfindung dadurch gelöst, daß der Behälter mindestens eine Bodenöffnung aufweist, daß Stützeinrichtungen vorgesehen sind, durch die der Behälter von unten abstützbar ist, und daß Hubeinrichtungen vorgesehen sind, welche eine durch die Bodenöffnung des Behälters unter gleichzeitigem Anheben des Materials nach oben ausfahrbare Hubstempelanordnung aufweisen.

Der entscheidende Vorteil der erfindungsgemäßen Austragvorrichtung besteht darin, daß auch die Materialteile, die sich unmittelbar am Boden des Behälters befinden, bis zu dessen Oberkante angehoben werden können, von wo sie problemlos in eine Bearbeitungs- bzw. Entnahmestellung verschoben und/oder gerollt werden können, was von Hand oder mittels einfacher mechanischer Hilfseinrichtungen geschehen kann.

Dabei hat es sich als günstig erwiesen, wenn Sicherungseinrichtungen zur Sicherung des Behälters gegen ein Abheben von
den Stützeinrichtungen vorgesehen sind. Durch das Vorhandensein derartiger Sicherungseinrichtungen wird nämlich ein
Abheben des Behälters von den Stützeinrichtungen aufgrund der
Reibung des Materials an den Behälterwänden mit Sicherheit
vermieden, so daß das Anheben des Materials vom Bedienungspersonal nicht besonders überwacht werden muß.

Als besonders vorteilhaft hat es sich erwiesen, wenn Führungseinrichtungen vorgesehen sind, die derart ausgebildet sind,
daß der Behälter in Längsrichtung der Führungseinrichtungen
verfahrbar ist. Bei dieser Ausgestaltung einer erfindungsgemäßen Austragvorrichtung kann nämlich bei der Bearbeitung bzw.
Entnahme des Materials aus dem einen Behälter mit Hilfe der
Fördereinrichtungen bereits ein zweiter Behälter herangeführt
werden, der dann längs der Führungseinrichtungen nur noch
in eine Arbeitsstellung verfahren werden muß, nachdem der
zuvor benötigte Behälter mit Hilfe der Fördereinrichtung von
dort abtransportiert ist. Auf diese Weise lassen sich durch
den nötigen Materialtransport bedingte Wartezeiten erheblich
verkürzen.

Günstig ist es dabei, wenn die Führungseinrichtungen Führungsschienen an den Stützeinrichtungen und Räder an dem Behälter
umfassen, insbesondere wenn die Führungsschienen als Zahnstangen und die Räder als Zahnräder ausgebildet sind, und wenn
Antriebseinrichtungen zum Herbeiführen einer Längsbewegung
des Behälters längs der Führungseinrichtungen vorgesehen sind,
welche vorzugsweise als Antriebseinrichtungen für die Zahnräder an dem Behälter ausgebildet sind. Bei dieser Ausgestaltung kann nämlich der Transport eines Behälters aus der Wartestellung in die Arbeitsstellung schnell und einfach durchgeführt werden, wobei der Zahnstangen-Zahnrad-Antrieb den
besonderen Vorteil bietet, daß unerwünschte Längsbewegungen
des Behälters durch Blockieren der Zahnräder sicher vermieden
werden können.

Im Hinblick auf den Einsatz einer erfindungsgemäßen Austragvorrichtung in Verbindung mit einer Regalanlage ist es ferner
vorteilhaft, wenn der Behälter durch eine Kassette und einen
die Kassette tragenden, rahmenförmig aufgebauten Laufwagen
gebildet ist und wenn die Räder der Führungseinrichtungen an
dem Laufwagen vorgesehen sind. Bei dieser Ausgestaltung können nämlich die Kassetten aus einem Regal durch die regaleigenen Fördereinrichtungen auf einen zugeordneten Laufwagen abgesetzt werden, der dann zwischen der Arbeitsstellung und der
Wartestellung verfahrbar ist, wobei der rahmenförmige Aufbau
des Laufwagens ein portalartiges Übergreifen der Hubeinrichtungen gestattet, deren im allgemeinen mehrere Hubstempel innerhalb eines die Oberseite des Laufwagens bildenden Tragrahmens frei zu den im allgemeinen mehreren Bodenöffnungen der
Kassette und in diese hinein ausfahrbar sind.

Wenn eine Austragvorrichtung gemäß der Erfindung in Verbindung
mit einer Regalanlage eingesetzt wird, in der das Material,
insbesondere das Stabmaterial oder dergleichen, in Kassetten
in mindestens einer Regalzeile lagerbar ist, wobei die Regalanlage Fördereinrichtungen aufweist, mit deren Hilfe die Kassetten quer zu ihrer Längsrichtung von einer Breitseite aus
in übereinander angeordnete Regalfächer absetzbar und aus diesen entnehmbar sind, dann ist es ferner besonders vorteilhaft,
wenn die Stützeinrichtungen und die Führungseinrichtungen in
Längsrichtung mindestens eines Regalfachs verlaufen und derart über mindestens eine der Schmalseiten der Regalzeile vorstehen, daß der aus dem Laufwagen und einer Kassette bestehende
Behälter aus diesem Regalfach vor die Schmalseite der Regalzeile ausfahrbar ist, und wenn die Hubeinrichtungen vor der
Schmalseite der Regalzeile angeordnet sind. Bei dieser Ausgestaltung einer erfindungsgemäßen Austragvorrichtung ergibt
sich nämlich der entscheidende Vorteil, daß die regaleigenen
Fördereinrichtungen für das Zusammenwirken mit der erfindungsgemäßen Austragvorrichtung in keiner Weise abgeändert bzw.
modifiziert werden müssen, da der Transport einer Materialkassette von und zu dem Laufwagen in der gleichen Weise erfolgt wie der Transport der Kassetten von und zu den übrigen,
"normalen" Regalfächern, wobei der Transport der Kassetten
vor die Schmalseite der Regalzeile dann mit Hilfe des Laufwagens erfolgt, ohne daß die regaleigenen Fördereinrichtungen
ihre normale Arbeitsposition zwischen den Breitseiten der von
ihnen bedienten Regalzeilen verlassen müßten.

Besonders vorteilhaft ist es in Ausgestaltung der Erfindung
ferner, wenn bei einer Regalanlage mit mindestens einer Doppelzeile aus zwei an ihrer einen Breitseite aneinandergrenzenden Regalzeilen zwei benachbarte und auf gleicher Höhe befindliche Regalfächer mit zugeordneten Stütz-, Führungs- und Hubeinrichtungen ausgerüstet sind. Diese Ausgestaltung eröffnet
nämlich die Möglichkeit, in jeweils einem der benachbarten Regalfächer die Kassette bereitzustellen, die als nächste benötigt wird, während sich die Kassette aus dem anderen Regalfach
in der Arbeitsstellung befindet, so daß nach dem Zurückführen
dieser Kassette in ihr Regalfach die nächste Kassette durch
einen kurzen Quertransport in die Arbeitsstellung bewegt werden kann.

Günstig ist es dabei, wenn die Stütz- und Führungseinrichtungen der zwei benachbarten Regalfächer jeweils eine quer, insbesondere senkrecht, zur Breitseite der Doppelzeile verlaufende Rollenbahn aufweisen, über die der zugeordnete Laufwagen nach Art einer Portalfördervorrichtung freihinwegbewegbar
ist, und wenn mindestens eine der Rollenbahnen mittels einer
zugeordneten Hubvorrichtung derart anhebbar ist, daß eine
Kassette von dem sie tragenden Laufwagen abhebbar und ihr
Boden durch die Rollenbahn abstützbar ist. Durch das Vorhandensein der Rollenbahnen läßt sich nämlich der erforderliche
Quertransport der Kassetten leicht und schnell bewerkstelligen, insbesondere wenn die eine Rollenbahn stationär ausgebildet ist und wenn die andere Rollenbahn aus einer tieferen
Stellung, in der sie von ihrem zugeordneten Laufwagen überfahrbar ist, mittels der Hubvorrichtung auf das Niveau der ersten
Rollenbahn anhebbar ist derart, daß eine durch die zweite
Rollenbahn abgestützte Kassette in Querrichtung auf die erste
Rollenbahn verschiebbar ist.

Bei dieser Ausgestaltung kann sich zunächst eine erste Kassette
in der Arbeitsstellung befinden, wo die erforderliche Materialbearbeitung  und/oder -entnahme erfolgt. Diese erste Kassette wird dann mit ihrem Laufwagen in ihr Regalfach zurückgefahren. Inzwischen wurde die zweite Kassette aus ihrem Regalfach auf ihrem Laufwagen über die zweite Rollenbahn gefahren und durch Betätigung der Hubvorrichtung auf diese zweite
Rollenbahn aufgesetzt, so daß sie sich nunmehr auf der Höhe
der ersten Rollenbahn befindet und über die beiden Rollenbahnen in Querrichtung in die Arbeitsstellung gerollt werden kann,
wobei zwischen den beiden Rollenbahnen zur Überbrückung eines
durch die Laufwagen bedingten Zwischenraums noch ein oder
mehrere zusätzliche Stützrollen vorgesehen sein können.

Wenn dann auch die zweite Kassette nicht mehr in der Arbeitsposition benötigt wird, kann sie über die Rollenbahnen in ihre
Ausgangsstellung zurückgerollt werden und wird dann wieder
auf ihren Laufwagen abgesenkt und auf diesem in ihr Regalfach
zurückgefahren. Währenddessen kann, unmittelbar nachdem die
zweite Kassette die Arbeitsstellung verlassen hat, bereits
wieder eine neue "erste" Kassette auf ihrem Laufwagen in die
Arbeitsposition verfahren werden, die zwischenzeitlich durch
die Fördereinrichtungen gegen die zuerst in der Arbeitsstellung befindliche Kassette ausgewechselt wurde.

Obwohl der Quertransport der zweiten Kassetten über die Rollenbahnen ohne weiteres von Hand erfolgen kann, hat es sich
in Ausgestaltung der Erfindung als vorteilhafter erwiesen,
wenn spezielle Quertransporteinrichtungen vorgesehen sind,
mit deren Hilfe der Quertransport unmittelbar nach dem Räumen der Arbeitsstation durch die erste Kassette automatisch
herbeiführbar ist und die vorzugsweise als mittels eines Zylinderaggregats betätigbare Scherenanordnung ausgebildet sind,
deren Scherenarme an ihrem freien Ende eine Doppelrollenanordnung aufweisen, zwischen die ein Längswandbereich der zweiten Kassette beim Anheben derselben auf ihre Rollenbahn anhebbar ist.

Weitere Einzelheiten und Vorteile der Erfindung werden nachstehend anhand von Zeichnungen noch näher erläutert und/oder
sind Gegenstand von Unteransprüchen. Es zeigen:
Fig. 1 einen schematischen Querschnitt durch eine bevorzugte
       Ausführungsform einer erfindungsgemäßen Hubvorrichtung in Form einer Doppel-Ausschleusstation für eine
       Regalanlage, wobei die Schnittlinie längs der Linie
       A-A in Fig. 2 verläuft;

Fig. 2 einen Längsschnitt durch die Ausschleusstation gemäß

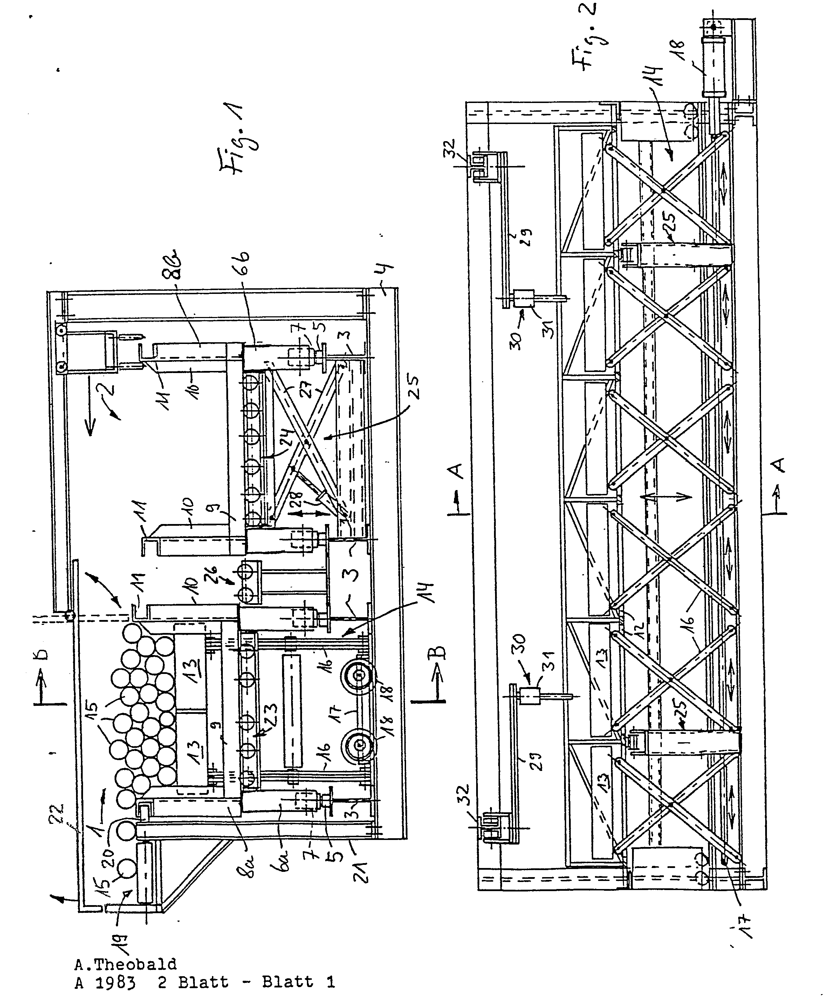

       Fig. 1 längs der Linie B-B in dieser Figur und

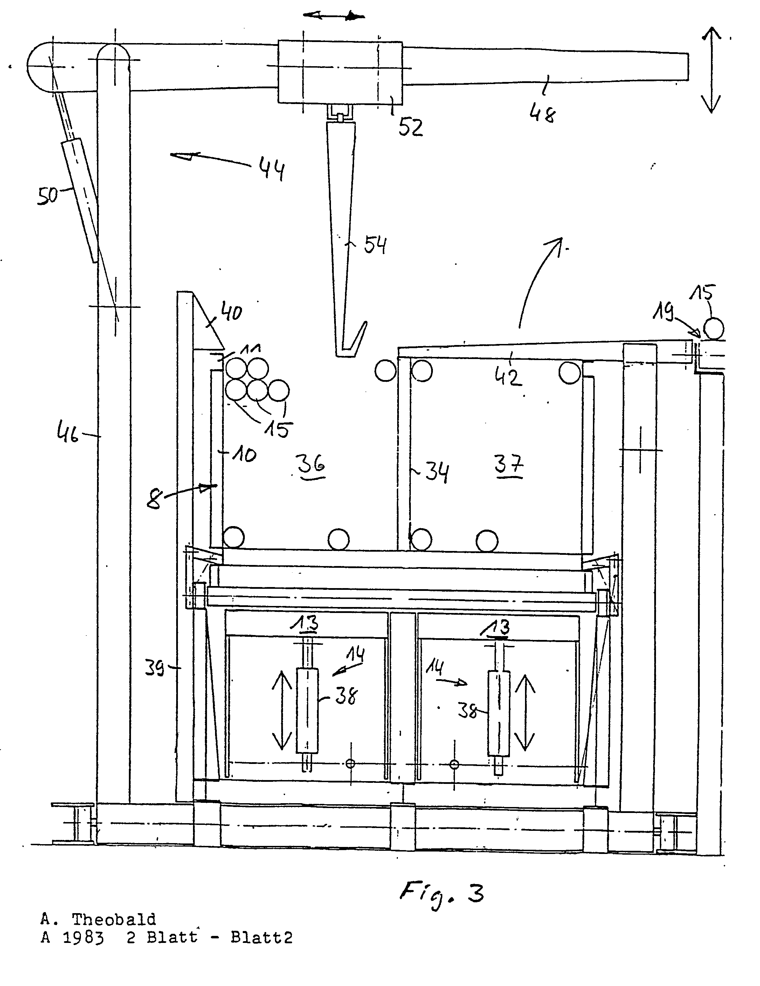

Fig. 3 eine schematische Stirnansicht einer abgewandelten
       Ausführungsform einer Austragvorrichtung gemäß der
       Erfindung in Form einer          Ausschleusstation für
       eine Regalanlage.

Im einzelnen zeigen die Figuren 1 und 2 eine Ausschleusstation mit einer ersten erfindungsgemäßen Austrageinheit 1 -
in Fig. 1 links - und mit einer  zweiten erfindungsgemäßen
Austrageinheit 2 - in Fig. 1 rechts.

Jede der Austrageinheiten 1, 2 besitzt zwei als I-Träger ausgebildete Längsträger 3, die parallel zueinander verlaufen
und fest mit Querträgern 4 verbunden sind, die ebenfalls als
I-Träger ausgebildet sind.

An der Oberseite jedes Längsträgers 3 ist eine Zahnschiene 5
vorgesehen. Jedem Paar von Zahnschienen ist ein Laufwagen 6a,
6b zugeordnet, welche als Räder Zahnräder 7 aufweist, die mittels geeigneter Antriebseinrichtungen (nicht dargestellt) zu
einer Drehbewegung antreibbar sind und auf den zugeordneten
Zahnschienen 5 laufen.

Die Laufwagen 6a, 6b sind rahmenförmig aufgebaut und besitzen
oben einen geschlossenen rechteckigen Tragrahmen aus Profilleisten, Rohren oder dergleichen, an dem nach unten abstehende
Seitenteile befestigt sind, in denen die Zahnräder 7 drehbar
gelagert sind. Der Tragrahmen der Laufwagen 6a, 6b entspricht
im wesentlichen den Tragrahmen am Boden der Fächer einer zugeordneten Regalanlage. Die zugeordnete Regalanlage weist bei
dem betrachteten Ausführungsbeispiel einer Doppel-Ausschleusstation mindestens eine Doppelzeile aus zwei an einer ihrer
Breitseiten aneinandergrenzenden Regalzeilen auf, wobei die
Ausschleusstation an einer der Schmalseiten der Doppelzeile
vorgesehen ist. Die Regalanlage weist ferner Fördereinrichtungen auf, mit deren Hilfe Kassetten mit Langmaterial in
übereinander befindliche Fächer der Regalzeilen hineingesetzt
werden können und mit deren Hilfe die Kassetten ferner aus
ihren Fächern herausgehoben werden können. Derartige Regalanlagen sind in der eingangs erwähnten früheren Anmeldung
(amtliches Aktenzeichen P 27 25 789.2   ) beschrieben.

Wie erwähnt sind die Laufwagen 6a, 6b der erfindungsgemäßen
Austrageinheiten 1, 2 an den Schmalseiten einer Doppelzeile
des Regalsystems nun so ausgebildet, daß die Kassetten von
den Fördereinrichtungen der Regalanlage in den an die Ausschleusstation angrenzenden Fächern ebenso auf die Laufwagen
abgesetzt und von diesen abgehoben werden können wie auf die
Tragrahmen am Boden der übrigen Regalfächer. Insofern sind
hinsichtlich der regaleigenen Fördereinrichtungen keinerlei
Änderungen erforderlich, wenn eine erfindungsgemäße Ausschleusstation vorgesehen werden soll.

In Fig. 1 ist auf jedem der Laufwagen 6a, 6b eine der genannten
Kassetten 8a bzw. 8b vorgesehen, und man erkennt, daß die
Kassetten 8a, 8b frei auf den Laufwagen 6a, 6b sitzen und beim
Ausführungsbeispiel nur eine Bodenplatte 9 und Seitenwände 10
aufweisen, während die Stirnseiten der Kassetten, die bei der
Lagerung den Schmalseiten der Regalzeilen zugewandt sind,
offen sind. Der obere Rand der Seitenwände 10 der Kassetten
8a, 8b ist jeweils durch ein nach außen offenes U-Profil 11
gebildet.

1983

Erfindungsgemäß sind nun in den Bodenplatten 9 der Kassetten
8a, 8b, wie dies aus Fig. 2 deutlich wird, Öffnungen 12 vorgesehen, durch die hindurch Hubstempel 13 von Hubeinrichtungen 14 nach oben in das Innere der Kassetten 8a, 8b hinein
ausfahrbar sind derart, daß die Oberseite der Hubstempel 13
in der höchsten Stellung derselben etwa in der Höhe des oberen Randes der Seitenwände 10 bzw. der U-Profile 11 der Kassetten 8a, 8b liegt.

Bei der als Ausführungsbeispiel betrachteten Doppel-Ausschleusstation gemäß der Erfindung sind die Hubeinrichtungen 14 mit
ihren Hubstempeln 13 ein integraler Bestandteil der ersten
Austrageinheit 1. Die Hubeinrichtungen 14 sind in einer mittleren Stellung gezeichnet, in der ihre Hubstempel 13 etwa bis
zur halben Höhe der Kassette 8a angehoben sind, so daß
die in der Kassette 8a als Langmaterial gelagerten Rohre oder
Stangen 15 teilweise bereits über den oberen Rand der Seitenwände 10 der Kassette 8a angehoben sind, obwohl diese Kassette
8a, wie man leicht erkennt, nicht vollständig mit Material gefüllt ist.

Wie aus Fig. 2 in der Zeichnung deutlich wird, wo die Rohre
oder Stangen 15 in der Kassette 8a zur Erhöhung der Übersichtlichkeit nicht dargestellt sind, bestehen die Hubeinrichtungen 14 beim Ausführungsbeispiel aus einer Hubschere, deren
Scherenarme 16 an ihrem unteren Ende mittels eines Zugstabes
17 in Richtung der eingezeichneten Doppelpfeile betätigbar sind
und deren obere Enden an die Hubstempel 13 angelenkt sind,
sowie aus einem Hubzylinder 18, insbesondere einem hydraulischen Zylinderaggregat, dessen Kolbenstange mit dem Zugstab 17
zusammenwirkt.

Die vorstehende Beschreibung macht deutlich, daß die Austrageinheit 1 der betrachteten erfindungsgemäßen Doppel-Ausschleusstation bereits eine außerordentlich vorteilhafte
Austragvorrichtung darstellt, die es ermöglicht, das Stab-
bzw. Langmaterial 15 aus der Kassette 8a so anzuheben, daß
es bequem vereinzelt und einer Zuführrollenbahn 19 zugeführt
werden kann, die in Höhe der Seitenwände 10 der Kassette 8a
parallel zur Längsseite derselben bzw. parallel zu den Längsträgern 3 angeordnet ist. Die betrachtete Austrageinheit 1 ist
dabei noch durch Sicherungseinrichtungen ergänzt, die verhindern, daß beim Ausfahren der Hubstempel 13 auch die Kassette 8a
selbst mit angehoben wird. Beim Ausführungsbeispiel umfassen
die Sicherungseinrichtungen am oberen Ende einer Längswand 21
der Austrageinheit 1 vorgesehene Sicherungszapfen 20 oder
dergleichen, die von außen in das eine - in Fig. 1 linke -
U-Profil 11 eingreifen. Außerdem umfassen die Sicherungseinrichtungen einen aufschwenkbaren Deckel 22, dessen Hinterkante,
wenn der Deckel 22 aufgeschwenkt ist und die durch gestrichelte Linien angedeutete Lage einnimmt, unmittelbar über dem anderen - in Fig. 1 rechten - U-Profil 11 der Kassette 8a liegt.

Die Austrageinheit 1 ist ferner mit einer stationären Rollenbahn 23 ausgerüstet, die mittels geeigneter Streben (nicht
dargestellt) an der Basis der Austrageinheit 1, also beispielsweise an den Längs- oder Querträgern 3 bzw. 4 befestigt ist und
die vom Tragrahmen des Laufwagens 6a mit geringem, aber ausreichendem Spiel überfahren werden kann. Diese stationäre
Rollenbahn 23, welche von dem Laufwagen 6a portalartig übergriffen wird, ist dann wesentlich, wenn die Austrageinheit 1
durch die Austrageinheit 2, wie dies beim Ausführungsbeispiel
der Fall ist, zu einer Doppel-Ausschleusvorrichtung ergänzt
ist.

Wie aus Fig. 1 deutlich wird, sind beim Ausführungsbeispiel
für die zweite Austrageinheit 2 keine Hubeinrichtungen 14
vorgesehen, mit deren Hilfe Hubstempel in das Innere der
Kassette 8b ausfahrbar wären, obwohl dies, wenn es im Einzelfall unter Berücksichtigung der besonderen Gegebenheiten
zweckmäßig erschiene, auch bei der zweiten Austrageinheit 2
der Fall sein könnte. Statt dessen ist bei der zweiten Austrageinheit 2 eine der stationären Rollenbahn 23 entsprechende Rollenbahn 24 vorgesehen, die mittels einer Hubvorrichtung 25 aus einer in der Zeichnung gezeigten unteren Stellung,
in der sie von dem Laufwagen 6b portalartig frei überfahrbar
ist, in eine obere Stellung anhebbar ist, in der sie sich im
wesentlichen auf der Höhe der stationären Rollenbahn 24 befindet, wobei die Kassette 8b im Verlauf der Hubbewegung der
Rollenbahn 24 von dem Tragrahmen ihres Laufwagens 6b abgehoben wird und nunmehr mit ihrem Boden auf der anhebbaren Rollenbahn 24 aufsitzt. Aufgrund der beschriebenen Konstruktion kann
die Kassette 8b aus der zweiten Austrageinheit 2 - unter der
Voraussetzung, daß der Laufwagen 6a mit der Kassette 8a der
ersten Austrageinheit 1 in das zugehörige Regalfach seiner
Regalzeile zurückgefahren ist - über die anhebbare Rollenbahn
24 und über stationäre Stützrollen 26 zwischen den Rollenbahnen 23 und 24 in Querrichtung auf die Rollenbahn 23 gerollt
werden, so daß sie nunmehr, abgesehen von dem geringen Spiel
zwischen dem Laufwagen 6a und der Rollenbahn 23, in die gleiche
Position gebracht werden kann, die zuvor von der Kassette 8a
eingenommen wurde. Sobald die Kassette 8b diese neue Lage
einnimmt, kann nunmehr das in ihr befindliche Material durch
Betätigung der Hubeinrichtungen 14 mit Hilfe der Hubstempel 13
wieder auf das Niveau der Seitenwände der Kassette bzw. auf
die Höhe der Zuführrollenbahn angehoben werden. An der Arbeitsstation steht  also sofort nach dem Zurückfahren der ersten Kassette 8a in ihr Regalfach wieder eine neue Kassette, und zwar die Kassette 8b, zur Verfügung, während die Kassette 8a, aus der das Material zuerst entnommen wurde, durch die regaleigenen Fördereinrichtungen bereits wieder zu einem freien Fach der Regalanlage transportiert werden kann, woraufhin dann eine neue Kassette in dem leergewordenen, an die Ausschleusstation angrenzenden Regalfach auf den Laufwagen 6a aufgesetzt werden kann. Diese neue Kassette kann dann auf dem Laufwagen 6a sofort wieder in die Arbeitsstation vorgefahren werden, sobald die Kassette 8b über die Rollenbahnen 23 und 24 und die Stützrollen 26 wieder in ihre Ausgangsstellung zurückgeführt ist. Während nunmehr an der Arbeitsstation aus der neu herangeführten Kassette 8a wieder Material entnommen wird, kann die in die Austrageinheit 2 zurückgeführte Kassette 8b abgesenkt und dann zusammen mit ihrem Laufwagen 6b wieder in ihr zugehöriges Regalfach zurückgeführt werden, wo nunmehr in der bereits beschriebenen Weise wieder mit Hilfe der regaleigenen Fördereinrichtungen ein Kassettenwechsel durchgeführt werden kann.

Beim Ausführungsbeispiel besteht die Hubvorrichtung 25 für die anhebbare Rollenbahn 24 der zweiten Austrageinheit 2 wieder aus einer Hubschere mit Scherenarmen 27, deren Kreuzungswinkel durch ein Zylinderaggregat 28 veränderbar ist.

Zusätzlich zu den erläuterten Einrichtungen sind beim Ausführungsbeispiel für den Quertransport der Kassette 8b über die Laufbahn 23, 24, 26 Querfördereinrichtungen vorgesehen, die nachstehend noch näher erläutert werden sollen.

Wie die Figuren 1 und 2 zeigen, umfassen die Querfördereinrichtungen Schwenkarme 29, an deren freien Enden Gabelköpfe 30 vorgesehen sind. Jeder Gabelkopf weist zwei im Abstand voneinander angeordnete Rollen 31 auf, mit deren Hilfe der obere
Rand der in Fig. 1 rechten Seitenwand 10 der Kassette 8b
erfaßbar ist, wenn diese mit Hilfe der Hubvorrichtung 25
durch die Rollenbahn 24 angehoben wird. Wenn nun die Schwenkarme 29 verschwenkt werden, dann kann die Kassette 8b aus
ihrer in Fig. 1 gezeigten Position in die von der Kassette
8a eingenommene Position bewegt und - bei umgekehrter Schwenkrichtung - aus dieser Position wieder in ihre Ausgangsstellung zurückbewegt werden. Die Schwenkarme können dabei Bestandteil einer Scherenanordnung sein, welche mit Hilfe eines
Zylinderaggregates betätigbar ist. Die Schwenkarme können
aber auch, wie dies in den Figuren 1 und 2 gezeigt ist, an
Laufkatzen befestigt sein, welche längs oberen Querträgern
32 verfahrbar sind. Bei dieser Ausgestaltung kann gegebenenfalls vollständig auf eine Schwenkbewegung der Arme 29 verzichtet werden. Bei beiden vorstehend angesprochenen Ausführungsformen für die Querfördereinrichtungen sorgen auf jeden
Fall die Rollen 31 an den Gabelköpfen 30 für eine reibungs-
und verschleißarme Führung der Kassetten 8b.

Ein weiteres wesentliches Merkmal der betrachteten Doppel-
Ausschleusstation gemäß der Erfindung besteht ferner darin,
daß alle beweglichen Teile im Sinne der Unfallschutzvorschriften von einem geschlossenen Gehäuse umgeben sein können, welches nur zur Schmalseite der angrenzenden Doppelzeile der
Regalanlage offen (dort jedoch nicht zugänglich) und im übrigen durch Öffnen des aufschwenkbaren Deckels 22 zugänglich
ist.

Fig. 3 zeigt eine abgewandelte Ausführungsform einer erfindungsgemäßen Austragvorrichtung in Form einer Ausschleusstation, an der jeweils nur eine Kassette 8 vor eine Schmalseite einer zugeordneten Regalzeile verfahrbar ist. Die Kassette 8 unterscheidet sich dabei von den Kassetten 8a und 8b des Ausführungsbeispiels gemäß Fig. 1 und 2 dadurch, daß sie in Längsrichtung durch eine Trennwand 34 in zwei Kammern unterteilt ist, in denen gegebenenfalls verschiedene Materialien gelagert werden können. Die Kassette 8 kann ähnlich wie beim ersten Ausführungsbeispiel wieder mittels eines Laufwagens aus dem Regalfach herausgefahren werden oder auf einer Rollenbahn aus quer zur Längsrichtung der Kassette verlaufenden Rollen 35, wie dies in Fig. 3 dargestellt ist. Entsprechend der Unterteilung der Kassette 8 in zwei Kammern 36, 37 sind jeder der Kammern 36 bzw. 37 jeweils getrennte Hubeinrichtungen 14 mit Hubstempeln 13 zugeordnet, welche dem Anheben des Materials in den Kammern 36, 37 dienen. Anders als beim ersten Ausführungsbeispiel, wo die Hubeinrichtungen eine Hubschere aufwiesen, sind beim betrachteten Ausführungsbeispiel senkrecht angeordnete Hubzylinder 38 vorgesehen, um die Hubstempel 13 durch entsprechend dimensionierte Bodenöffnungen in die Kammern 36, 37 der Kassette 8 auszufahren, wobei die Hubeinrichtungen 14 für die Kammern 36 und 37 getrennt betätigbar sind. Die Sicherung der Kassette 8 gegen ein Abheben erfolgt an der einen - in Fig. 3 linken - Seite durch einen an einer Seitenwand 39 vorgesehenen Vorsprung 40, der den oberen Rand der betreffenden Seitenwand 10 der Kassette 8 übergreift.

Auf der anderen - in Fig. 3 rechten - Seite erfolgt die Sicherung der Kassette 8 gegen ein Abheben bei der dargestellten Betriebssituation mit Hilfe eines aufschwenkbaren Deckels 42, der von der Zuführrollenbahn 19 bis zur Trennwand 34 reicht. In der gezeichneten Lage bildet die Oberseite des Deckels 42 eine Transportbahn, über die Bauteile 15 aus der Kammer 36
zu der Zuführrollenbahn 19 bewegt werden können und umgekehrt. Wenn dagegen Material von und zu der Kammer 37 der
Kassette 8 transportiert werden soll, dann wird der Deckel 42
aufgeschwenkt und gegebenenfalls entfernt, so daß das Material 15 gegebenenfalls über ein anstelle des Deckels 42 eingefügtes Abdeckelement, welches nur bis zur rechten Seitenwand 10 der Kassette 8 reicht, zwischen der Zuführrollenbahn
19 und der Kammer 37 transportiert werden kann.

Ergänzend zu den bisher beschriebenen Einrichtungen ist bei
der erfindungsgemäßen Austragvorrichtung gemäß Fig. 3 noch
eine kranartige Transportvorrichtung 44 vorgesehen, welche
einen senkrechten fest montierten oder gegebenenfalls auch in
Längsrichtung der Kassette 8 verfahrbaren Mast 46 aufweist,
an dessen oberen Ende ein Ausleger 48 angelenkt ist, der mit
Hilfe eines Zylinderaggregats 50 gegenüber dem Mast 46
schwenkbar ist. Längs des Auslegers 48 ist eine Laufkatze 52
verfahrbar, welche einen Kranhaken 54 trägt. In diesen Kranhaken 54 können nun Stangen oder dergleichen aus den Kammern
36, 37 eingelegt und gegebenenfalls über den geschlossenen
Deckel 42 zu der Zuführrollenbahn 19 gehoben bzw. gezogen werden.

Ausgehend von dem vorstehend erläuterten Ausführungsbeispiel
gemäß Fig. 3 versteht es sich, daß anstelle einer längsgeteilten Kassette 8 mit zwei Kammern 36, 37 gegebenenfalls
auch wieder zwei getrennte Kassetten vorgesehen sein können,
aus denen das Material wegen der getrennten Hubeinrichtungen
getrennt entnommen werden kann, so daß auch hier wieder die
Möglichkeit besteht, das Material aus der einen Kassette zu
entnehmen bzw. zu verarbeiten und dabei bereits eine zweite Kassette in eine Bereitschaftsstellung zu bringen. Der im Zusammenhang mit dem ersten Ausführungsbeispiel beschriebene Quertransport der Kassetten kann dabei entfallen, da das Material aus der von der Zuführrollenbahn weiter entfernten Kassette einfach über die andere Kassette hinwegtransportiert wird.

Weiterhin besteht ausgehend von dem Ausführungsbeispiel gemäß Fig. 3 auch die Möglichkeit, in zwei unmittelbar übereinander befindlichen Regalfächern Laufwagen vorzusehen, so daß beispielsweise auch eine über der Kassette 8a in dem nächst höheren Regalfach befindliche Kassette auf ihrem zugeordneten Laufwagen, vor das Regal verfahren werden könnte, wenn entsprechende Laufschienen zur Verfügung stünden. Um auch bei dieser Ausgestaltung einen schnellen und rationellen Kassettenwechsel herbeiführen zu können, ist es dann lediglich erforderlich, den Tragrahmen mit den Schienen, welcher in Fig. 1 die Kassette 8a mit ihrem Laufwagen trägt, derart mit einer Hubeinrichtung auszurüsten, daß dieser Tragrahmen von der sogenannten Arbeitshöhe in der er sich in Fig. 1 befindet, bis zur Höhe des nächsten Regalfaches angehoben werden kann. Wenn derartige Hubeinrichtungen für den Tragrahmen mit den Schienen vorgesehen sind, dann kann beispielsweise die Kassette 8a nach Abschluß der Arbeiten an dem in ihr befindlichen Material zunächst in das Regal zurückgefahren werden, woraufhin dann die Hubeinrichtungen betätigt werden, um den Tragrahmen mit den Schienen auf die Höhe des nächsthöheren Regalbodens anzuheben. Nunmehr kann eine neue Kassette mit ihrem Laufwagen auf die Schienen des Tragrahmens herausgefahren werden, welcher dann wieder auf die Arbeitshöhe, d. h. in seine Ausgangsstellung abgesenkt werden kann, woraufhin das in der neuen Kassette befindliche Material bearbeitet bzw. entnommen werden kann. Während dieser Bearbeitungs-und

Entnahmezeiten kann  die zuletzt in das Regal zurückbewegte Kassette in ein anderes Regalfach transportiert werden;
Außerdem kann eine neue Kassette in das unmittelbar über
dem jetzt leeren Regalfach befindliche Regalfach transportiert werden.Auf diese Weise steht jede neue Kassette schnell
zur Verfügung. Dabei versteht es sich, daß auch umgekehrt
vorgegangen werden kann, indem man nämlich die neue Kassette
jeweils in dem unteren der beiden übereinanderbefindlichen
Regalfächer bereitstellt, und diese Kassette dann nach Abschluß der Arbeiten , unter Betätigung der Hubeinrichtungen
für den Tragrahmen mit den Schienen, in das nächsthöhere
Fach zurückliefert. Insgesamt bietet auch diese Variante der
Erfindung zahlreiche Vorteile, insbesondere in sofern, als
nicht unbedingt Doppelzeilen mit zwei an ihrer einen Breitseite aneinandergrenzenden Regalzeilen benötigt werden.

0013033

-1-

A 1983                    Anmelder: Adolf Theobald
27. Dez. 1978                       Merschstraße 5
                                    5758 Fröndenberg-Warmen


P a t e n t a n s p r ü c h e :

1. Austragvorrichtung für in einem nach oben offenen Behälter
   befindliches Material, insbesondere Stabmaterial und dergleichen,   d a d u r c h   g e k e n n z e i c h n e t ,
   daß der Behälter (6,8) mindestens eine Bodenöffnung (12)
   aufweist, daß Stützeinrichtungen (3, 4) vorgesehen sind,
   durch die der Behälter (6, 8) von unten abstützbar ist,
   und daß Hubeinrichtungen (14) vorgesehen sind, welche eine
   durch die Bodenöffnung (12) des Behälters (6, 8) unter
   gleichzeitigem Anheben des Materials (15) nach oben ausfahrbare Hubstempelanordnung (13) aufweisen.

2. Austragvorrichtung nach Anspruch 1, dadurch gekennzeichnet, daß Sicherungseinrichtungen (20, 22; 40, 42) zur Sicherung des Behälters (6, 8) gegen ein Abheben von den
   Stützeinrichtungen (3, 4) vorgesehen sind.

3. Austragvorrichtung nach Anspruch 1 oder 2, dadurch gekennzeichnet, daß Führungseinrichtungen (5, 7) vorgesehen sind
   die derart ausgebildet sind, daß der Behälter (6, 8) in
   Längsrichtung der Führungseinrichtungen (5, 7) verfahrbar
   ist.

4. Austragvorrichtung nach Anspruch 3, dadurch gekennzeichnet, daß die Führungseinrichtungen Führungsschienen (5)
   an den Stützeinrichtungen (3, 4) und Räder (7) an dem Behälter (6, 8) umfassen.

5. Austragvorrichtung nach Anspruch 4, dadurch gekennzeichnet, daß die Führungsschiene als Zahnstange (5) und die Räder an dem Behälter (6, 8) als Zahnräder (7) ausgebildet sind.

6. Austragvorrichtung nach Anspruch 3, dadurch gekennzeichnet, daß Antriebseinrichtungen zum Herbeiführen einer Längsbewegung des Behälters (6, 8) längs der Führungseinrichtungen (5, 7) vorgesehen sind.

7. Austragvorrichtung nach Anspruch 5 und 6, dadurch gekennzeichnet, daß die Antriebseinrichtungen als Antriebseinrichtungen für die Zahnräder (7) an dem Behälter (6, 8) ausgebildet sind.

8. Austragvorrichtung nach einem der Ansprüche 3 bis 7, dadurch gekennzeichnet, daß der Behälter durch eine Kassette (8; 8a, 8b) und einen die Kassette tragenden, rahmenförmig ausgebildeten Laufwagen (6a, 6b) gebildet ist und daß die Räder (7) der Führungseinrichtungen (5, 7) an dem Laufwagen (6a, 6b) vorgesehen sind.

9. Austragvorrichtung nach Anspruch 8 für eine Regalanlage, in der das Material, insbesondere das Stabmaterial oder dergleichen, in Kassetten in mindestens einer Regalzeile lagerbar ist und mit Fördereinrichtungen, mit deren Hilfe die Kassetten quer zu ihrer Längsrichtung von einer Breitseite aus in übereinander angeordnete Regalfächer absetzbar und aus diesen entnehmbar sind, dadurch gekennzeichnet, daß die Führungseinrichtungen (5) in Längsrichtung mindestens eines Regalfaches verlaufen und derart über mindestens eine der Schmalseiten der Regalzeile vorstehen, daß der aus dem Laufwagen (6a, 6b) und einer Kassette (8a, 8b) bestehende Behälter aus diesem Regalfach vor die Schmalseite der Regalzeile ausfahrbar ist, und daß die Hubeinrichtungen (14) vor der Schmalseite der Regalzeile angeordnet sind.

10. Austragvorrichtung nach Anspruch 9 für eine Regalanlage mit mindestens einer Doppelzeile aus zwei an ihrer einen Breitseite aneinandergrenzenden Regalzeilen, dadurch gekennzeichnet, daß zwei benachbarte und auf gleicher Höhe befindliche Regalfächer mit zugeordneten Stütz-, Führungs- und Hubeinrichtungen (3, 4, 5, 7, 14) ausgerüstet sind.

11. Austragvorrichtung nach Anspruch 10, dadurch gekennzeichnet, daß die Stütz- und Führungseinrichtungen (3, 4, 5, 7) der zwei benachbarten Regalfächer jeweils eine quer, insbesondere senkrecht, zur Breitseite der Doppelzeile verlaufende Rollenbahn (23, 24) aufweisen, über die der zugeordnete Wagen (6a, 6b) nach Art einer Portalfördervorrichtung frei hinwegbewegbar ist, und daß mindestens eine der Rollenbahnen (24) mittels einer zugeordneten Hubvorrichtung (25) derart anhebbar ist, daß eine Kassette (8b) von dem sie tragenden Laufwagen (6b) abhebbar und ihr Boden (9) durch die Rollenbahn (24) abstützbar ist.

12. Austragvorrichtung nach Anspruch 11, dadurch gekennzeichnet, daß die eine Rollenbahn (23) stationär ausgebildet ist und daß die andere Rollenbahn (24) aus einer tieferen Stellung, in der sie von ihrem zugeordneten Laufwagen (6b) überfahrbar ist, mittels der Hubvorrichtung (25) auf das Niveau der ersten Rollenbahn (23) anhebbar ist, derart, daß eine durch die anhebbare Rollenbahn (24) abgestützte Kassette (8b) in Querrichtung auf die stationäre Rollenbahn (23) verschiebbar ist.

13. Austragvorrichtung nach Anspruch 11 oder 12, dadurch ge-
    kennzeichnet, daß zwischen den Rollenbahnen (23, 24) ein
    oder mehrere stationäre Stützrollen (26) vorgesehen sind.

14. Austragvorrichtung nach einem der Ansprüche 11 bis 13,
    dadurch gekennzeichnet, daß Querfördereinrichtungen (27
    bis 32) vorgesehen sind, mit deren Hilfe die von der anhebbaren Rollenbahn (24) abgestützte Kassette (8b) auf die
    stationäre Rollenbahn (23) und zurück auf die anhebbare
    Rollenbahn (24) bewegbar ist.

15. Austragvorrichtung nach Anspruch 14, dadurch gekennzeichnet, daß die Querfördereinrichtung eine mittels eines Zy-
    linderaggregats betätigbare Schwenkarmanordnung, insbeson-
    dere eine Scherenarmanordnung aufweisen.

16. Austragvorrichtung nach Anspruch 15, dadurch gekennzeichnet, daß die Schwenkarme (29) bzw. die Scherenarme an ihren
    freien Enden Doppelrollenanordnungen (30, 31) aufweisen,
    zwischen die ein Seitenwandbereich einer auf der anhebbaren Rollenbahn (24) befindlichen Kassette (8b) anhebbar
    ist.

17. Austragvorrichtung nach einem der Ansprüche 1 bis 16, dadurch gekennzeichnet, daß für den Transport des Materials
    (15) aus mindestens einer Kassette (8) eine kranartige
                              (44)
    Transportvorrichtung/vorgesehen ist.

18. Austragvorrichtung nach einem der Ansprüche 8 bis 17, da-
                                                    mindestens
    durch gekennzeichnet, daß die Kassette (8) durch/eine in

ihrer Längsrichtung verlaufende Trennwand (34) in zwei mindestens Kammern (36, 37) unterteilt ist und daß jeder Kammer eigene, getrennt betätigbare Hubeinrichtungen (14) zugeordnet sind.

19. Austragvorrichtung nach Anspruch 18, dadurch gekennzeichnet, daß ein Deckel (42) vorgesehen ist, mit dessen Hilfe eine der Kammern (37) für die Dauer des Materialtransports von und zu der anderen Kammer (36) derart abdeckbar ist, daß die Oberseite des Deckels (42) als Transportfläche zur Verfügung steht.

20. Austragvorrichtung nach Anspruch 8, dadurch gekennzeichnet, daß die Führungseinrichtungen zugeordnete Hubeinrichtungen aufweisen, mit deren Hilfe sie auf die Höhe des Fachbodens mindestens zweier übereinander befindlicher Regalfächer bewegbar sind, und daß in den mindestens zwei übereinander befindlichen Regalfächern Laufwagen zur Aufnahme jeweils einer Kassette vorgesehen sind.

A.Theobald
A 1983 2 Blatt - Blatt 1

*Fig. 1*

*Fig. 2*

0013033

0013033

Fig. 3

A. Theobald
A 1983  2 Blatt - Blatt2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - B - 2 163 101 (KEURO)<br>* Spalte 10, Zeilen 64-68; Spalte 11; Spalte 12, Zeilen 1-10; Spalte 17, Zeilen 14-68; Spalte 18, Zeilen 1-41; Figuren 3-7; 13-17 * | 1-3,8, 9 |
| D,A | DE - A - 2 725 789 (THEOBALD)<br>* Anspruch 1 * | 1 |

**KLASSIFIKATION DER ANMELDUNG (Int.Cl. 3)**

B 65 G 1/04

**RECHERCHIERTE SACHGEBIETE (Int. Cl. 3)**

B 65 G
B 21 D
B 23 Q

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18-03-1980 | OSTIJN |

EPA form 1503.1  06.78